# EUROPEAN PATENT SPECIFICATION

(11) **EP 2 733 561 B1**
(45) Date of publication and mention of the grant of the patent: **04.05.2022**
(21) Application number: 13193413.5
(22) Date of filing: 19.11.2013
(51) Int. Cl.: G05D 1/00, G08G 5/06

(54) **Collision avoidance system for aircraft ground operations**
Kollisionsvermeidungssystem für Flugzeugbodenoperationen
Système d'évitement de collision pour opérations au sol d'un aéronef

(30) Priority: 19.11.2012 US 201261728005 P
(43) Date of publication of application: 21.05.2014
(73) Proprietor: ROSEMOUNT AEROSPACE INC., Burnsville, MN 55306-4898 (US)
(72) Inventor: Durand, William, Edina, MN Minnesota 55436 (US)
(74) Representative: Dehns

(56) References cited:
- EP-A1- 1 470 967
- EP-A1- 1 787 142
- EP-A1- 1 843 173
- US-A1- 2009 174 591
- US-A1- 2012 081 236
- None

## Description

### BACKGROUND

The present disclosure claims priority from United States Provisional Patent Application Serial No. 61/728,005, filed on November 19, 2012.

The present disclosure relates to aircrafts and, more specifically, to systems and methods to aid flight crews in avoiding obstacles while the aircraft is moving on the ground.

Aircraft are required to operate in two different environments, on the ground and in the air. While on the ground (e.g., while at an airport) aircraft need to be moved around to position them for takeoff as well as for other reasons such as maintenance, storage, passenger loading/unloading and the like. However, aircraft are designed, primarily, to optimize their flight, not their ground based operations. This can lead to cases on the ground, especially with wide body aircraft, where the aircraft crews have poor situational awareness of the aircraft and its dimensions due to limited visibility. Thus, the crew is limited in their ability to judge clearance of the aircraft with respect to obstacles on the ground, which may be numerous at unimproved airports in some countries. EP 1843173 A1 relates to an obstacle detecting control device and method. EP 1470967 A1 relates to an obstacle detecting/alarming system for a vehicle. EP 1787142 A1 relates to a collision avoidance warning and taxiing guidance device. US 2009/174591 A1 relates to an obstacle detection system notably for an anticollision system. US 2012/081236 A1 relates to a near-to-eye head tracking ground obstruction system and method.

### SUMMARY

According to one embodiment of the present disclosure, a ground collision avoidance system (GCAS) for an aircraft as defined in claim 1 is provided.

In another embodiment of the present disclosure, a method of preventing a collision of an aircraft as defined in claim 9 is provided.

Additional features and advantages are realized through the techniques of the present disclosure. Other embodiments and aspects of the disclosure are described in detail herein and are considered a part of the claimed disclosure. For a better understanding of the disclosure with the advantages and the features, refer to the description and to the drawings.

### BRIEF DESCRIPTION OF THE SEVERAL VIEWS OF THE DRAWINGS

The subject matter which is regarded as the disclosure is particularly pointed out and distinctly claimed in the claims at the conclusion of the specification. The forgoing and other features, and advantages of the disclosure are apparent from the following detailed description taken in conjunction with the accompanying drawings in which:
FIG. 1 shows an aircraft having a ground collision avoidance system (GCAS) in one embodiment of the present disclosure;
FIG. 2 shows an aircraft having a GCAS in another embodiment of the present disclosure;
FIG. 3 shows an aircraft having a GCAS in yet another embodiment of the present disclosure;
FIG. 4 shows an illustrative GCAS system according to one embodiment; and
FIG. 5 shows a flowchart illustrating a method of avoiding a ground collision according to an embodiment.

### DETAILED DESCRIPTION

On large airplanes (such as the Boeing 747, 757, 767, and 777; the Airbus A380; and the McDonnell Douglas MD-10 and MD-11), the pilot cannot accurately judge positions of the airplane's wingtips from the cockpit unless the pilot opens the cockpit window and extends his or her head out the window, which is often impractical. One approach to avoiding such a problem is to include a ground collision avoidance system (GCAS). However, in some cases obstacles that are collision threats may go undetected by the GCAS. Also, if a GCAS provides too many false alarms ("false positives") when evaluating the threat of collision with an obstacle, the crew may begin to ignore or disable the system.

Embodiments disclosed herein integrate electromagnetic obstacle sensing with effective signal processing to detect a threat of collision of an object, such as an airplane, with an obstacle with a high probability of collision, or in other words, with a low incidence of false alarms ("false positives"). Detected collision threats trigger an alert to an autonomous crew with sufficient lead time for the crew to take avoidance actions safely. The system is effective in both day and night conditions and in degraded environmental conditions. The system is safe to operate in an airport environment and does not impact either onboard or ground electronic systems.

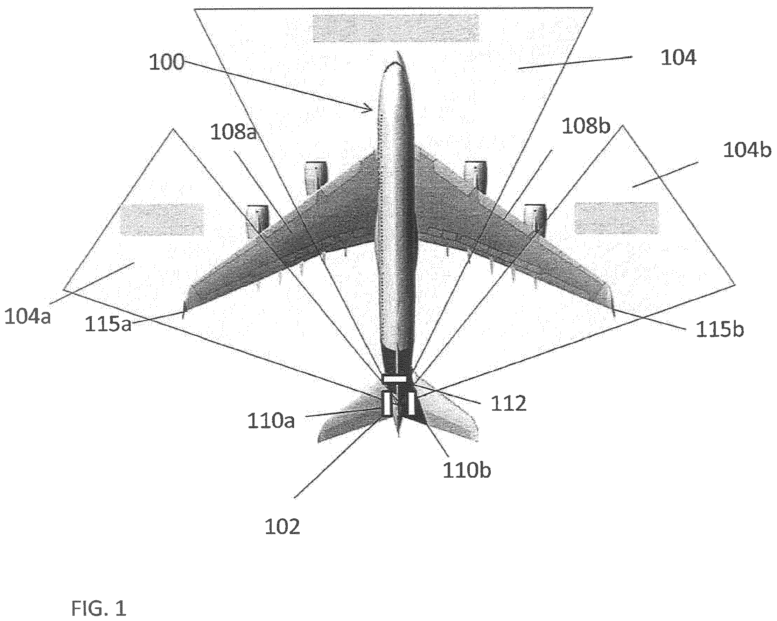

FIG. 1 shows an aircraft 100 having a GCAS in one embodiment of the present disclosure. The aircraft includes sensors 110a, 110b and 112 disposed on a tail 102 of the aircraft 100. In one embodiment, the tail 102 may include a sensor 110a on a left side of the aircraft 100 that has a left wingtip view 104a, or in other words, a field-of-view that covers a volume of space near a wingtip 115a of the left wing 108a of the aircraft 100. Similarly, sensor 110b on a right side of the aircraft 100 has a right wingtip view 104b or a field-of-view that covers a volume of space near the wingtip 115b of the right wing 108b of the aircraft 100. The tail 102 may further include a sensor 112 that includes a view along a fuselage of the aircraft 100. In various embodiments, the left side sensor 110a and the right side sensor 110b may include a radio frequency (RF) sensor such as a transducer for transmitting and receiving radar signals at one or more frequencies. Sensor 112 may be a camera or other device for recording optical images. However, sensor 112 may also be an RF frequency sensor in various embodiments.

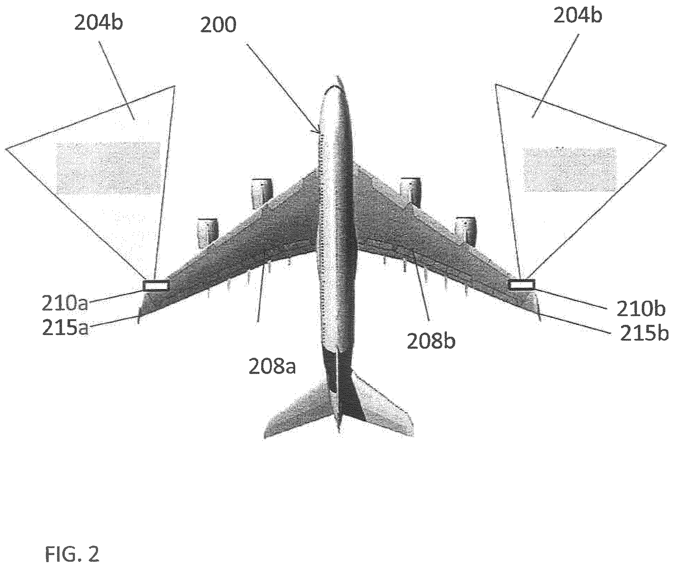

FIG. 2 shows an aircraft 200 having a GCAS in another embodiment of the present disclosure. Sensors 210a and 210b are provided in wings 208a and 208b, respectively, of the aircraft 200. Sensors 210a and 201b may be RF sensors such as transducers for obtaining radar signals. The field-of-view for sensors 210a, 210b show the volumes of space in front of wingtips 215a and 215b, respectively. A sensor for displaying a front view such as the front view 106 of FIG. 1 is not shown for clarity but may be provided, for example, by a sensor located in the tail 102 as in FIG. 1.

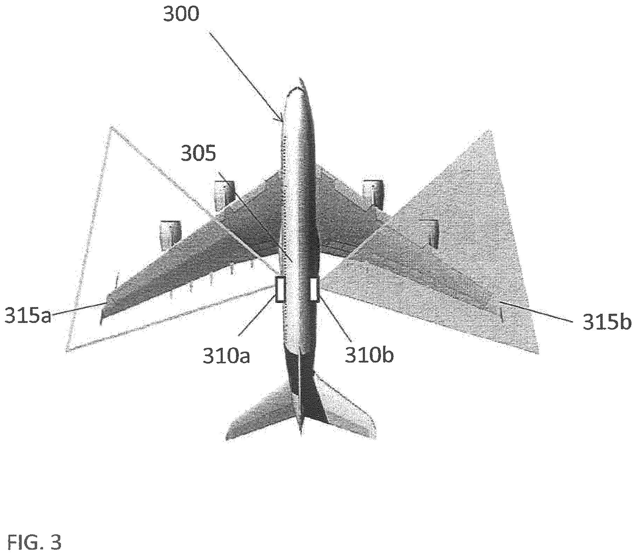

FIG. 3 shows an aircraft 300 having a GCAS in yet another embodiment of the present disclosure. Sensors 310a and 310b are mounted on a fuselage 305 of the aircraft 300. Sensors 310a and 301b may be RF sensors such as transducers for obtaining radar signals. Sensor 310a may be oriented to have a field-of-view that shows the volume of space in front of wingtip 315a. Sensor 310b may be oriented to have a field-of-view that shows the volume of space in front of wingtip 315b. Although not shown, a sensor for displaying a front view of the aircraft 300 may be provided, such as the front view 106 of FIG. 1. Sensor fields of view may be widened to include a forward view along the fuselage to detect objects in the taxi direction as well.

In prior GCAS's, only a single type of sensor (e.g., video cameras, imaging infrared (IIR) or ultrasonic cameras) were provided. In embodiments disclosed herein, a GCAS is provided that includes not only prior sensor types but also radar sensors to increase the breadth of data available for processing and collision alarm decision making. Data fusion across multiple sensors may increase decision quality under many conditions. Also, multiple radar technologies may be included. For instance, Ultra Wideband (UWB) radars may be integrated with Frequency Modulated Continuous Wave (FMCW) units to improve obstacle detection performance at both short and long ranges.

The radar sensors described herein may be low power, high performance radio frequency devices. If an obstacle is present within the radar field of view, the reflection of the transmitted signal from the obstacle is received by the sensor. In one embodiment, a monostatic radar configuration uses the same antennas for transmitting and receiving signal energy. In another embodiment, a multistatic configuration may use multiple antennas to characterize obstacle geometries. Both configurations may be employed in a single system.

Transmitted radar energies need to be safe for humans nearby the sensor, but sufficient to detect distant obstacles. The maximum range required will be determined by aircraft taxi speed, crew response time and safe aircraft stopping distances. In one embodiment, the radars can support taxi speeds up to 30 knots.

According to one embodiment, the radar sensors are capable of detecting obstacles greater than 4 centimeters in size. Obstacles of particular collision risk in airport taxi environments include: airfield fence posts / poles; airfield lighting; taxiway markings; housing structures; other aircraft; ground vehicles; and ground personnel to name but a few. As discussed briefly above, the sensors (e.g., radar antennas/modules) may be mounted at various locations on the aircraft including the wingtip(s), fuselage, and radome (aft of weather radar antenna). The radar employs a beam width suitable for detecting obstacle collision threats, while ignoring obstructions that are not a threat to the aircraft.

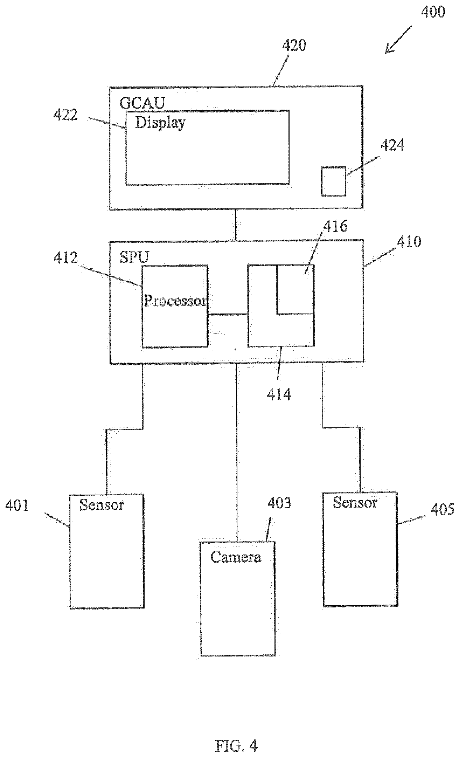

FIG. 4 shows an illustrative GCAS system 400 according to one embodiment. The system 400 includes sensors 401, 403 and 405. The sensors 401 and 403 may represent RF sensors such as the RF sensors shown in FIGS. 1-3. Sensor 403 may be a camera or visual sensor. Sensors 401, 403 and 405 are coupled to a Signal Processing Unit (SPU) 410 and provide information regarding obstacle range and position to the Signal Processing Unit (SPU) 410. The sensors 401, 403 and 405 may provide the information either wirelessly or via a wired connection. The SPU 410 includes a processor 412 and a memory device 414. The memory device 414 may be a non-transitory memory device, such as a RAM or ROM device or other suitable memory device. The memory device 414 may be suitable for storing various data that may be used in the GCAS system 400 as well as various data that is obtained from the sensors 401, 403 and 405 or from calculations performed at processor 412. In addition, the memory device 414 may include one or more programs 416 or set of instructions that are accessible to the processor 412. When accessed by the processor 412, the one or more programs 416 enable the processor 412 to perform the methods disclosed herein for avoiding collision with an obstacle while on the ground.

The processor 412 performs various calculations in order to determine a presence of an obstacle and to perform a decision-making algorithm to determine a probability of collision with the obstacle. In one embodiment, the processor 412 may match radar signals to obstacle shape templates through a correlation process in order to identify an obstacle presence, type, shape, etc. The processor may apply adaptive noise filters which characterize noise energy and attenuate the noise energy accordingly, and then normalize a noise floor in order to establish an effective obstacle detection threshold. The processor 412 may further employ threshold filters which identify radar return signals sufficiently above the noise floor and report these signals as representing obstacles that are potential collision threats. Multiple radar signals or scans may be stacked in order to enhance a signal-to-noise ratio of the obstacle. The potential collision threat may be mapped to a range and azimuth location around the aircraft and to their motion relative to the aircraft.

The processor 412 may also group radar signals meeting predetermined obstacle criteria and enter them as "objects" into tracking files. Each tracking file can be repeatedly tested for temporal persistence, intensity, rate of change of intensity and trajectory to help differentiate objects as obstacles that are collision threats, other obstacles, false alarms or background clutter. Once a persistent obstacle collision track has been established, the processor determines distance to the aircraft and issues an appropriate alarm or warning signal. If the tracks persist and grow as range decreases, the process performs a decision-making program to declare the tracks a probable collision and issues an alarm or warning.

The SPU 410 therefore executes data fusion algorithms, processes obstacle information, together with critical aircraft dynamics such as groundspeed, heading, and aircraft position to compute obstacle closing velocity and predict if a collision is probable. If a collision is predicted, the SPU 410 sends a signal to the GCAS Crew Alerting Unit (GCAU) 420 which then alerts the pilot to the potential collision.

Various data may be sent to a GCAU 420 which may be an interface in a cockpit of the aircraft or which is otherwise accessible to crew of the aircraft. The various data may then be presented at the GCAU 420 to the crew in order to inform the crew of any obstacles that may be within a vicinity of the aircraft and capable of causing mechanical or structural damage to the aircraft.

In one embodiment, the GCAU 420 may include a screen or display 422 for providing a visual image to the crew. The visual image may include a representative image of an obstacle in relation to a part of the aircraft such as a wingtip. The display 422 may also show other data relevant to a distance between the aircraft and the obstacle and/or to an action for avoiding or preventing a collision. The GCAU 420 may further include an audio alarm 424 that may provide an audible signal in order to alert the crew to the possibility of colliding with an obstacle. Additionally, a visual cue such as a flashing light at the display 422 may be used to alert the crew of the possibility of collision. The GCAU 420 may provide system health information and indicates the operational status of the system. The GCAU 420 may also provide a means for the fight crew to disable the system. In one embodiment, the GCAU 420 is mounted in the cockpit, in the field of view of both the pilot and the first officer, and provides flight crew interface with the GCAS.

In operation, the GCAS disclosed herein may operate as follows: while taxiing, the flight crew identifies an obstacle approaching but can't visually determine if it will clear the aircraft (frequently the wingtip) (alternately, the crew may not identify an obstacle due to decreased visibility conditions or high workload situation); the pilot slows the aircraft while approaching the obstacle and monitors the GCAU 320 mounted in the cockpit; the GCAS continually monitors distance to the obstacle; if the GCAS predicts the aircraft will collide with the obstacle, it issues an alert and the pilot stops the aircraft or implements other evasive action preventing the collision; if stopped, the pilot determines the appropriate maneuver before continuing to taxi the aircraft; and if the GCAS predicts the aircraft will not collide with the obstacle, then no alert is issued and the crew continues taxiing.

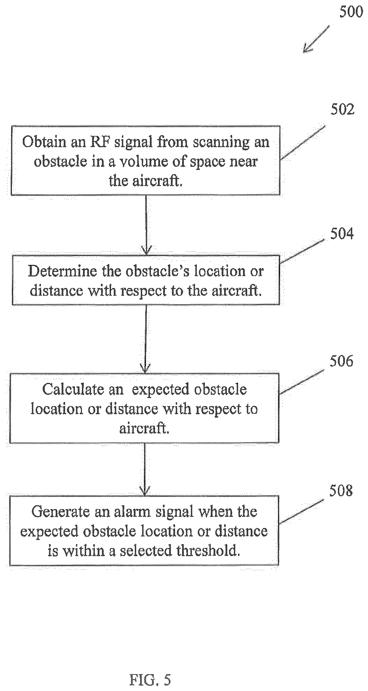

FIG. 5 shows a flowchart 500 illustrating a method of avoiding a ground collision according to an embodiment. In block 502, one or more signals are obtained from the RF sensors, wherein the signals are indicative of obstacles and their location with respect to the aircraft. In block 504, the one or more signals are used to determine a location or distance of the obstacle with respect to the aircraft or a part of the aircraft such as a wingtip. In block 506, the determined location of the obstacle is used to determine an expected location or distance of the obstacle with respect the aircraft. In various embodiments, the one or more signals may be signals taken over a selected time period. Therefore, the location of the obstacle may be determined at several times during the selected time period and a trend of the obstacle's location over time may be used to determine a trajectory and/or velocity of the obstacle with respect to the aircraft. The determined trajectory and/or velocity of the obstacle may then be used to determine the expected location of the obstacle at a selected later time.

In block 508, the expected location of the obstacle at the later time is compared to a selected threshold and if the expected location is within the selected threshold, an alarm may be generated to alert the crew. A suitable threshold may be 10 meters or 20 meters, so that if the obstacle is forecast to come within this distance of the aircraft or a wingtip of the aircraft, the alarm is generated. The threshold is adjusted with respect to aircraft taxiing speeds to allow for a safe deceleration and stopping distance. The threshold may also be selected so that a possibility of false positive collision forecasting is reduced or minimized.

Also, a probability of collision with the obstacle may be determined based on current trajectory of the aircraft, current trajectory of the obstacle, etc. If the determined probability of collision is greater than a selected probability threshold, the alarm may be generated. The level of the probability threshold may be selected so as to reduce of minimize the occurrence of a false alarm. When an alarm is generated, the alarm may continued to be heard or displayed until either the aircraft has stopped or the threat of collision is no longer imminent or the system is deactivated. To minimize the potential for false positive alarms, the system may be used only when the aircraft is on the ground and/or taxiing.

In various embodiments, the obstacle may be tracked by the control unit and the tracking of the obstacle may be displayed at the screen of the user interface 420. The tracking may employ a loop between blocks 502 and 504 in order to obtain the obstacle's location at various times. In various embodiments, an obstacle that is being tracked and/or monitored using one sensor, such as sensor 112 of FIG. 1 may be "handed off" to another sensor, such as sensor 110b of FIG. 1 as the obstacle passes out of the field-of-view of the sensor 112 and into the field-of-view of sensor 110b.

In one embodiment, Ultra Wideband (UWB) radars may be integrated with Frequency Modulated Continuous Wave (FMCW) units to improve GCAS performance at both short and long obstacle detection ranges. Sensor units can have both radar types included therein, although either radar may be used alone or with other sensors to construct a GCAS. Signal processing methods and algorithms will differ between radar types and methods of fusing data between the radars and other sensors will add complexity. Radar signal processing methods may include, but are not limited to, wavelet correlation which searches for signals characteristic of obstacle reflections and amplifies them while attenuating random noise, matching radar signals to obstacle shape templates through a correlation process, where high correlation helps rapidly identify obstacle presence and type/shape (e.g., light poles, etc.), adaptive noise filters which characterize noise energy and attenuate signals accordingly, then normalize the noise floor and help establish an effective obstacle detection threshold, threshold filters which identify radar return signals sufficiently above the noise floor and report these signals as representing obstacles that are potential collision threats, tracking of obstacles by their motion relative to the aircraft and combining adjacent signals with similar tracks into clusters for continued observation and subsequent mapping, and mapping potential collision threats to range and azimuth around the aircraft and to their motion relative to the aircraft for further understanding of collision potential.

In one embodiment, FMCW (e.g., 77 GHz) radar sensor alone with such advanced signal processing supports an effective GCAS capability. Many 77 GHz FMCW radars include integral scanning capability, enabling obstacle location mapping in both range and azimuth relative to the aircraft and they can track multiple obstacles simultaneously with rapid response to aircraft and obstacle motion (measurements repeated in milliseconds).

In other embodiments, the RF sensor(s) may operate within a short-wave infrared range (from about 0.9 micrometers (µm) to about 1.7 µm), mid-wave/long-wave infrared range; (from about 3 µm to about 14 µm), a millimeter wave range (from about 1 millimeter (mm) to about 1 centimeter (cm)), an ultra-wide band range (from about 1mm to about 1 cm), and any other suitable frequency range of the electromagnetic spectrum.

While the systems and methods disclosed herein has been discussed with respect to an aircraft, it is understood that the systems and methods may apply also to any object or vehicle moving along the ground.

The terminology used herein is for the purpose of describing particular embodiments only and is not intended to be limiting of the disclosure. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one more other features, integers, steps, operations, element components, and/or groups thereof.

The corresponding structures, materials, acts, and equivalents of all means or step plus function elements in the claims below are intended to include any structure, material, or act for performing the function in combination with other claimed elements as specifically claimed. The description of the present disclosure has been presented for purposes of illustration and description, but is not intended to be exhaustive or limited to the disclosure in the form disclosed. Many modifications and variations will be apparent to those of ordinary skill in the art without departing from the scope of the invention as defined by the claims. The embodiment was chosen and described in order to best explain the principles of the disclosure and the practical application, and to enable others of ordinary skill in the art to understand the disclosure for various embodiments with various modifications as are suited to the particular use contemplated.

## Claims

1. A ground collision avoidance system (GCAS) for an aircraft (100), the system comprising:
a radio frequency (RF) sensor (401, 403) for sensing a location of an obstacle
with respect to the aircraft as the aircraft moves along the ground; and a processor
**characterised in that** the processor (412) is configured to: identify the obstacle using the radar signal and an obstacle shape template and track the obstacle to determine a temporal persistence of the obstacle determine an expected location or distance of the obstacle with respect to the aircraft from the sensed location of the obstacle and a trajectory of the aircraft; and
generate an alarm signal when the expected distance of the obstacle from the aircraft is within a selected threshold, once a persistent obstacle collision track has been established..

2. The system of claim 1, wherein the obstacle has a velocity and trajectory, and the processor is further configured to:
determine the velocity and trajectory of the obstacle; and
determine the expected location of the obstacle using a determined velocity and trajectory of the obstacle.

3. The system of claim 1, wherein the RF sensor is located on the aircraft at at least one of: (i) a tail of the aircraft; (ii) a wing of the aircraft; and (iii) fuselage of the aircraft

4. The system of claim 1, wherein the RF sensor is a radar transducer.

5. The system of claim 1, wherein the RF sensor is configured to operate in at least one of: (i) a short-wave infrared range; (ii) a mid-wave infrared range; (iii) a long wave infrared range; (iv) a millimeter wave range; (v) an ultra-wide band range; and (vi) a frequency modulated continuous wave.

6. The system of claim 1, further comprising a camera (403) configured to provide an image to the processor, wherein the processor is configured to use signals from both the camera and the RF sensor to determine the expected location of the obstacle.

7. The system of claim 1, wherein the processor is also configured to track the location of the obstacle with respect to the aircraft.

8. The system of claim 1, wherein the processor is configured to determine a probability of collision between the aircraft and the obstacle, and generate the alarm signal when the determined probability is greater than a selected threshold value.

9. A method of preventing a collision of an aircraft, the method comprising:
sensing, using a radio frequency (RF) sensor, a location of an obstacle with respect to an aircraft as the aircraft moves along the ground; **characterised by** identifying the obstacle using the radar signal and an obstacle shape template; and
tracking the obstacle to determine a temporal persistence of the obstacle determining an expected location or distance of the obstacle with respect to the aircraft from the sensed location of the obstacle and a trajectory of the aircraft, and
generating an alarm signal when the expected distance of the obstacle from the aircraft is within a selected threshold once a persistent obstacle collision track has been established.

10. The method of claim 9, wherein the obstacle has a velocity and trajectory, the method further comprising:
determining the velocity and trajectory of the obstacle and determining the expected location of the obstacle using a determined velocity and trajectory of the obstacle.

11. The method of claim 9, wherein the RF sensor is located on the aircraft at at least one of: (i) a tail of the aircraft; (ii) a wing of the aircraft; and (iii) fuselage of the aircraft

12. The method of claim 9, wherein the RF sensor operates in at least one of: (i) a short-wave infrared range; (ii) a mid-wave infrared range; (iii) a long wave infrared range; (iv) a millimeter wave range; (v) an ultra-wide band range; and (vi) a frequency modulated continuous wave.

13. The method of claim 9, further comprising:
providing a visual image from a camera disposed on the aircraft and determining the expected location of the obstacle using both the image from the camera and a signal from the RF sensor.

14. The method of claim 9, wherein further comprising tracking the location of the obstacle with respect to the aircraft.

15. The method of claim 9, further comprising:
determining a probability of collision between the aircraft and the obstacle, and generating the alarm signal when the determined probability is greater than a selected threshold value.

## Patentansprüche

1. Bodenkollisionsvermeidungssystem (ground collision avoidance system - GCAS) für ein Flugzeug (100), wobei das System Folgendes umfasst:
einen Hochfrequenz(RF)-Sensor (401, 403) zum Erfassen einer Position eines Hindernisses in Bezug auf das Flugzeug, wenn sich das Flugzeug am Boden bewegt; und einen Prozessor,
**dadurch gekennzeichnet, dass** der Prozessor (412) so konfiguriert ist, dass:
er das Hindernis unter Verwendung des Radarsignals und einer Hindernisformschablone identifiziert und
das Hindernis verfolgt, um ein zeitliches Fortbestehen des Hindernisses zu ermitteln,
eine erwartete Position oder Entfernung des Hindernisses in Bezug auf das Flugzeug aus der erfassten Position des Hindernisses und einer Bewegungsbahn des Flugzeugs ermittelt, und
ein Alarmsignal erzeugt, wenn der erwartete Abstand des Hindernisses vom Flugzeug innerhalb eines ausgewählten Grenzwertes liegt, sobald eine anhaltende Hinderniskollisionsbahn erstellt wurde.

2. System nach Anspruch 1, wobei das Hindernis eine Geschwindigkeit und eine Bewegungsbahn aufweist und der Prozessor ferner so konfiguriert ist, dass:
er die Geschwindigkeit und die Bewegungsbahn des Hindernisses ermittelt; und
die erwartete Position des Hindernisses unter Verwendung der ermittelten Geschwindigkeit und Bewegungsbahn des Hindernisses ermittelt.

3. System nach Anspruch 1, wobei der RF-Sensor an dem Flugzeug an mindestens einem von: (i) einem Heck des Flugzeugs; (ii) einem Flügel des Flugzeugs; und (iii) dem Rumpf des Flugzeugs angeordnet ist.

4. System nach Anspruch 1, wobei der RF-Sensor ein Radarwandler ist.

5. System nach Anspruch 1, wobei der RF-Sensor so konfiguriert ist, dass er in mindestens einem aus: (i) einem kurzwelligen Infrarotbereich; (ii) einem mittelwelligen Infrarotbereich; (iii) einem langwelligen Infrarotbereich; (iv) einem Millimeterwellenbereich; (v) einem Ultrabreitbandbereich; und (vi) einer frequenzmodulierten durchgehenden Welle arbeitet.

6. System nach Anspruch 1, ferner eine Kamera (403) umfassend, die so konfiguriert ist, dass sie dem Prozessor ein Bild bereitstellt, wobei der Prozessor so konfiguriert ist, dass er Signale sowohl von der Kamera als auch vom RF-Sensor verwendet um die erwartete Position des Hindernisses zu ermitteln.

7. System nach Anspruch 1, wobei der Prozessor auch so konfiguriert ist, dass er die Position des Hindernisses in Bezug auf das Flugzeug verfolgt.

8. System nach Anspruch 1, wobei der Prozessor so konfiguriert ist, dass er eine Wahrscheinlichkeit einer Kollision zwischen dem Flugzeug und dem Hindernis ermittelt und das Alarmsignal erzeugt, wenn die ermittelte Wahrscheinlichkeit größer als ein ausgewählter Grenzwert ist.

9. Verfahren zum Verhindern einer Kollision eines Flugzeugs, wobei das Verfahren Folgendes umfasst:
Erfassen, unter Verwendung eines Hochfrequenz(RF)-Sensors, einer Position eines Hindernisses in Bezug auf ein Flugzeug, wenn sich das Flugzeug am Boden bewegt; **gekennzeichnet durch** das Identifizieren des Hindernisses unter Verwendung des Radarsignals und einer Hindernisformschablone; und
Verfolgen des Hindernisses, um ein zeitliches Fortbestehen des Hindernisses zu ermitteln,
Ermitteln einer erwarteten Position oder Entfernung des Hindernisses in Bezug auf das Flugzeug aus der erfassten Position des Hindernisses und einer Bewegungsbahn des Flugzeugs, und
Erzeugen eines Alarmsignals, wenn der erwartete Abstand des Hindernisses vom Flugzeug innerhalb eines ausgewählten Grenzwertes liegt, sobald eine anhaltende Hinderniskollisionsbahn erstellt wurde.

10. Verfahren nach Anspruch 9, wobei das Hindernis eine Geschwindigkeit und eine Bewegungsbahn aufweist und das Verfahren ferner Folgendes umfasst:
Ermitteln der Geschwindigkeit und der Bewegungsbahn des Hindernisses und Ermitteln der erwarteten Position des Hindernisses unter Verwendung einer ermittelten Geschwindigkeit und Bewegungsbahn des Hindernisses.

11. Verfahren nach Anspruch 9, wobei der RF-Sensor an dem Flugzeug an mindestens einem von: (i) einem Heck des Flugzeugs; (ii) einem Flügel des Flugzeugs; und (iii) dem Rumpf des Flugzeugs angeordnet ist.

12. Verfahren nach Anspruch 9, wobei der RF-Sensor in mindestens einem der Folgenden arbeitet: (i) einem kurzwelligen Infrarotbereich; (ii) einem mittelwelligen Infrarotbereich; (iii) einem langwelligen Infrarotbereich; (iv) einem Millimeterwellenbereich; (v) einem Ultrabreitbandbereich; und (vi) einer frequenzmodulierten durchgehenden Welle.

13. Verfahren nach Anspruch 9, ferner Folgendes umfassend:
Bereitstellen eines visuellen Bildes von einer Kamera, die an dem Flugzeug angeordnet ist, und Ermitteln der erwarteten Position des Hindernisses unter Verwendung sowohl des Bildes von der Kamera als auch eines Signals vom RF-Sensor.

14. Verfahren nach Anspruch 9, wobei es ferner das Verfolgen der Position des Hindernisses in Bezug auf das Flugzeug umfasst.

15. Verfahren nach Anspruch 9, ferner Folgendes umfassend:
Ermitteln einer Wahrscheinlichkeit einer Kollision zwischen dem Flugzeug und dem Hindernis und Erzeugen des Alarmsignals, wenn die ermittelte Wahrscheinlichkeit größer als ein ausgewählter Grenzwert ist.

## Revendications

1. Système d'évitement de collision au sol (GCAS) pour un aéronef (100), le système comprenant :
un capteur radiofréquence (RF) (401, 403) pour détecter un emplacement d'un obstacle par rapport à l'aéronef lorsque l'aéronef se déplace le long du sol ; et un processeur **caractérisé en ce que** le processeur (412) est configuré pour :
identifier l'obstacle à l'aide du signal radar et d'un modèle de forme d'obstacle et
suivre l'obstacle pour déterminer une persistance temporelle de l'obstacle
déterminer un emplacement ou une distance prévu(e) de l'obstacle par rapport à l'aéronef à partir de l'emplacement détecté de l'obstacle et d'une trajectoire de l'aéronef ; et
générer un signal d'alarme lorsque la distance prévue de l'obstacle à partir de l'aéronef se trouve dans un seuil sélectionné, une fois qu'un suivi de collision d'obstacle persistant a été établi.

2. Système selon la revendication 1, dans lequel l'obstacle a une vitesse et une trajectoire, et le processeur est en outre configuré pour :
déterminer la vitesse et la trajectoire de l'obstacle ; et
déterminer l'emplacement prévu de l'obstacle à l'aide d'une vitesse et d'une trajectoire déterminées de l'obstacle.

3. Système selon la revendication 1, dans lequel le capteur RF est situé sur l'aéronef au moins au niveau de l'un parmi :
(i) une queue de l'aéronef ; (ii) une aile de l'aéronef ; et (iii) le fuselage de l'aéronef.

4. Système selon la revendication 1, dans lequel le capteur RF est un transducteur radar.

5. Système selon la revendication 1, dans lequel le capteur RF est configuré pour fonctionner dans au moins l'une parmi : (i) une gamme infrarouge à ondes courtes ; (ii) une gamme infrarouge à ondes moyennes ; (iii) une gamme infrarouge à ondes longues ; (iv) une gamme d'ondes millimétriques ; (v) une gamme à bande ultra large ; et (vi) une onde continue modulée en fréquence.

6. Système selon la revendication 1, comprenant en outre une caméra (403) configurée pour fournir une image au processeur, dans lequel le processeur est configuré pour utiliser des signaux de la caméra et du capteur RF pour déterminer l'emplacement prévu de l'obstacle.

7. Système selon la revendication 1, dans lequel le processeur est en outre configuré pour suivre l'emplacement de l'obstacle par rapport à l'aéronef.

8. Système selon la revendication 1, dans lequel le processeur est configuré pour déterminer une probabilité de collision entre l'aéronef et l'obstacle, et générer le signal d'alarme lorsque la probabilité déterminée est supérieure à la valeur seuil sélectionnée.

9. Procédé de prévention d'une collision d'un aéronef, le procédé comprenant :
la détection, à l'aide d'un capteur radiofréquence (RF), d'un emplacement d'un obstacle par rapport à un aéronef lorsque l'aéronef se déplace le long du sol ; **caractérisé par** l'identification de l'obstacle à l'aide du signal radar et d'un modèle de forme d'obstacle ; et
le suivi de l'obstacle pour déterminer une persistance temporelle de l'obstacle
la détermination d'un emplacement ou d'une distance prévu(e) de l'obstacle par rapport à l'aéronef à partir de l'emplacement détecté de l'obstacle et d'une trajectoire de l'aéronef, et
la génération d'un signal d'alarme lorsque la distance prévue de l'obstacle par rapport à l'aéronef se trouve dans un seuil sélectionné une fois qu'un suivi de collision d'obstacle persistant a été établi.

10. Procédé selon la revendication 9, dans lequel l'obstacle a une vitesse et une trajectoire, le procédé comprenant en outre :
la détermination de la vitesse et de la trajectoire de l'obstacle et la détermination de l'emplacement prévu de l'obstacle à l'aide d'une vitesse et d'une trajectoire déterminées de l'obstacle.

11. Procédé selon la revendication 9, dans lequel le capteur RF est situé sur l'aéronef au moins au niveau de l'un parmi :
(i) une queue de l'aéronef ; (ii) une aile de l'aéronef ; et (iii) le fuselage de l'aéronef.

12. Procédé selon la revendication 9, dans lequel le capteur RF fonctionne dans au moins l'une parmi : (i) une gamme infrarouge à ondes courtes ; (ii) une gamme infrarouge à ondes moyennes ; (iii) une gamme infrarouge à ondes longues ; (iv) une gamme d'ondes millimétriques ; (v) une gamme à bande ultra large ; et (vi) une onde continue modulée en fréquence.

13. Procédé selon la revendication 9, comprenant en outre :
la fourniture d'une image visuelle d'une caméra disposée sur l'aéronef et la détermination de l'emplacement prévu de l'obstacle à l'aide de l'image de la caméra et d'un signal du capteur RF.

14. Procédé selon la revendication 9, dans lequel comprenant en outre le suivi de l'emplacement de l'obstacle par rapport à l'aéronef.

15. Procédé selon la revendication 9, comprenant en outre :
la détermination d'une probabilité de collision entre l'aéronef et l'obstacle, et la génération du signal d'alarme lorsque la probabilité déterminée est supérieure à la valeur seuil sélectionnée.
